# FASCICULE DE BREVET EUROPEEN

(11) **EP 0 790 437 B1**
(45) Date de publication et mention de la délivrance du brevet: **09.01.2002**
(21) Numéro de dépôt: 97400260.2
(22) Date de dépôt: 06.02.1997
(51) Int. Cl.: F16H 7/08, F01L 1/02

(54) **Culasse de moteur à combustion comprenant un dispositif de tension d'une chaine de transmission reliant deux arbres à cames**
Zylinderkopf einer Brennkraftmaschine mit einer Vorrichtung zum Spannen einer Treibkette zum Verbinden von zwei Nockenwellen
Cylinderhead of an internal combustion engine comprising a tensioning device of a transmission chain connecting two camshafts

(30) Priorité: 16.02.1996 FR 9601917
(43) Date de publication de la demande: 20.08.1997
(73) Titulaire: AUTOMOBILES PEUGEOT, 75116 Paris (FR); AUTOMOBILES CITROEN, 92200 Neuilly-sur-Seine (FR)
(72) Inventeur: Girard, Didier, 95180 Menucourt (FR)
(74) Mandataire: Gendraud, Pierre

(56) Documents cités:
- EP-A- 0 456 618
- DE-C- 3 719 163
- US-A- 4 974 561

## Description

L'invention est relative à une culasse de moteur à combustion.

Elle concerne plus précisément les moteurs à combustion dans lesquels deux arbres à cames sont disposés parallèlement dans une culasse fixée sur un bloc-cylindres par des vis perpendiculaires à ces deux arbres, qui sont reliés par une chaîne assurant l'entraînement en rotation de l'un des deux arbres par l'autre entraîné lui-même par l'arbre principal du moteur.

Un tel agencement est connu des documents EP-A-0 456 618 et DE-C-37 19 163 qui décrivent une culasse de moteur à combustion selon le préambule de la revendication 1.

La tension d'une chaîne de transmission s'effectue couramment par appui d'un tendeur -à ressort ou hydraulique- sur un tronçon de la chaîne, et de préférence en plus avec appui d'un autre tronçon de la chaîne sur un patin fixe.

On connaît, pour assurer la tension d'une chaîne reliant deux arbres à cames d'un moteur, un dispositif de tension placé entre les deux tronçons de chaîne reliant deux pignons fixés chacun à l'un des deux arbres. Dans un tel agencement, la fixation du dispositif est difficile, et l'espace étant restreint entre les deux tronçons, ceux-ci sont généralement écartés et incurvés notablement par le dispositif de tension, ce qui réduit le rendement de la transmission.

L'invention a pour but de réaliser de façon simple et fiable la tension d'une chaîne reliant deux arbres à cames dans une culasse d'un moteur du type susmentionné.

A cet effet, la culasse selon l'invention est caractérisée en ce que, la chaîne comportant un tronçon inférieur et un tronçon supérieur respectivement plus proche et plus éloigné du bloc-cylindres est disposée au-dessus de deux vis de fixation de la culasse, et en ce que la culasse comprend un tendeur agissant sur le tronçon supérieur en étant disposé au-dessus de lui, et un patin d'appui du tronçon inférieur maintenu sous celui-ci au moyen des deux vis précitées.

Suivant quelques dispositions préférées de ce dispositif :
- la culasse comprenant deux parties, respectivement inférieure et supérieure, jointes au droit d'un plan contenant les axes respectifs des deux arbres à cames, la partie inférieure de la culasse est fixée au bloc-cylindres notamment par les deux vis précitées, et à la partie supérieure de la culasse est fixé le tendeur.
- les deux vis comportant une tête saillant d'une face de la culasse en étant située sous la chaîne, le patin comporte deux évidements d'extrémité propres à recevoir chacun la tête d'une des deux vis.

Deux modes de réalisation du dispositif selon l'invention sont décrits ci-après, avec référence aux dessins annexés parmi lesquels :
- la figure 1 est une vue en coupe transversale, suivant la ligne I-I de la figure 2, d'une culasse d'un moteur équipé du dispositif selon un premier mode de réalisation ;
- la figure 2 est une vue partielle en coupe suivant la ligne ll-ll de la figure 1 ;
- la figure 3 est une vue partielle de dessus suivant la flèche F de la figure 1, avec retrait de la partie supérieure de la culasse ;
- la figure 4 est une vue en perspective d'une pièce du dispositif selon la figure 1 ;
- la figure 5 est une vue analogue à la figure 1 d'une partie de la culasse et du dispositif selon un second mode de réalisation.

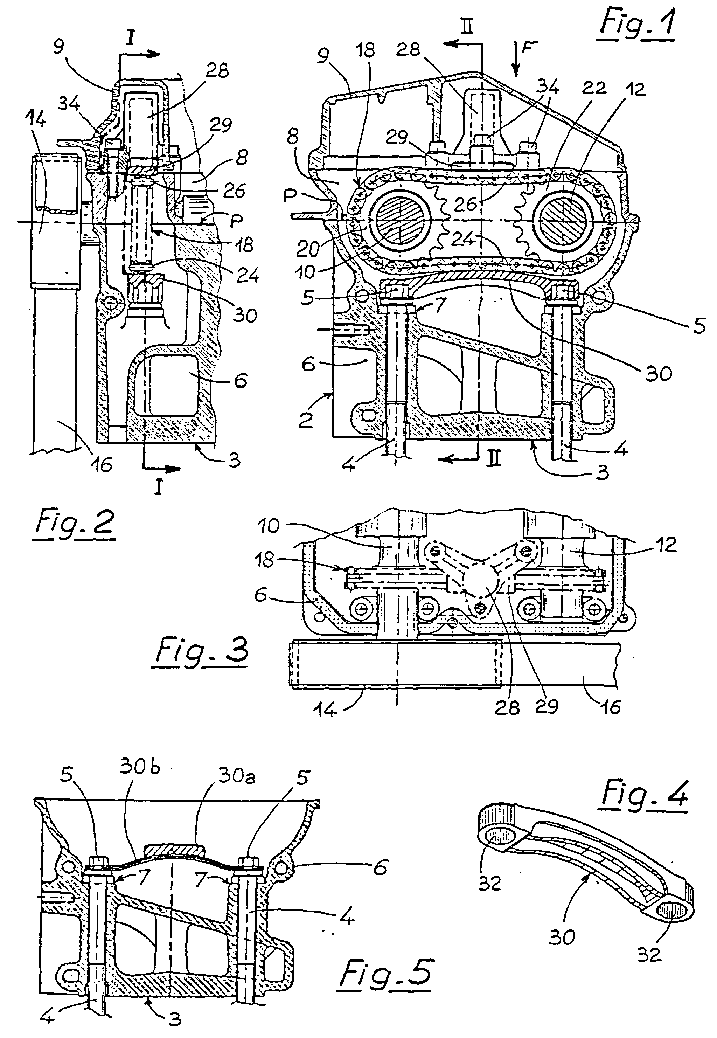

On voit sur les figures une culasse 2 d'un moteur à combustion, destinée à être fixée, au droit d'une face inférieure 3, sur un bloc-cylindres non représenté, par des vis telles que celles 4 visibles aux figures 1 et 5. La culasse comprend deux parties, respectivement inférieure 6 et supérieure 8, jointes suivant un plan P au droit duquel sont portés deux arbres à cames 10 et 12 qui sont parallèles entre eux et perpendiculaires aux vis 4.
Celles-ci comportent une tête 5 qui prend appui sur une face 7 de la partie inférieure 6, cette face étant située au-dessous du plan P. Un couvre-culasse 9 est disposé de façon classique sur la partie supérieure 8.

L'arbre à cames 10 est solidaire d'une roue dentée 14 pour son entraînement par l'arbre principal du moteur au moyen d'une courroie crantée 16, et il est relié à l'arbre à cames 12 par une chaîne de transmission 18 qui engrène avec deux pignons 20,22 respectivement fixés aux deux arbres à cames et qui comprend deux tronçons, respectivement inférieur 24 et supérieur 26, reliant les deux pignons. Le tronçon inférieur 24 est plus proche de la face inférieure 3 -et donc du bloc-cylindres après assemblage du moteur- et le tronçon supérieur 26 en est plus éloigné.

Conformément à l'invention, la chaîne 18 est disposée au-dessus des deux vis 4, et un dispositif de tension de la chaîne comporte d'une part un tendeur classique 28 -à ressort ou hydraulique, non détaillé ici- disposé au-dessus du tronçon supérieur 26 de façon à agir sur lui par un patin-poussoir 29, et d'autre part un patin 30 d'appui du tronçon inférieur 24, maintenu sous celui-ci par engagement -avec serrage ou très faible jeu- de la tête 5 de chacune des deux vis 4 dans l'un de deux évidements d'extrémité 32 appropriés pratiqués dans le patin 30, comme visible à la figure 4.

Plus précisément le tendeur 28 est fixé par trois vis 34 à la partie supérieure 8 de la culasse, la tête de chaque vis 4 (hexagonale ou cylindrique) saille vers le haut à partir de la face 7 précitée en étant située sous la chaîne, et les évidements 32 sont constitués chacun d'un alésage borgne cylindrique. Le patin est réalisé de préférence en matériau plastique dur.

Le montage de ce dispositif est particulièrement simple : après fixation de la partie inférieure 6 de la culasse sur le bloc-cylindres au moyen des vis 4, sont mis en place successivement le patin 30 sur les têtes de vis 5, les deux arbres à cames 10 et 12 équipés des pignons 20 et 22 avec la chaîne 18, puis la partie supérieure 8 de la culasse, le tendeur 28 et le couvre-culasse 9.

Diverses variantes du dispositif peuvent être réalisées. Par exemple selon le mode de réalisation de la figure 5, le patin 30a pour l'appui du tronçon inférieur 24 de la chaîne est ici de petite dimension et porté par une lame métallique 30b dont les extrémités sont percées de manière à être traversées et fixées sur les face 7 de la culasse par les deux vis 4.

## Revendications

1. Culasse de moteur à combustion destinée à être sur un bloc cylindre comprenant deux arbres à cames (10,20) parallèles reliés par une chaîne (18) comportant un tronçon inférieur (24) et un tronçon supérieur (26) respectivement plus proche et plus éloigné du bloc-cylindres, la culasse étant fixée sur le bloc cylindre par des vis (4) perpendiculaires aux deux arbres (10,20),
**caractérisée en ce que** la chaîne (18) est disposée au-dessus de deux vis (4) de fixation de la culasse (2) sur le bloc cylindre, et **en ce que** la culasse comprend un tendeur (28) agissant sur le tronçon supérieur (26) en étant disposé au-dessus de lui, et un patin (30;30a) d'appui du tronçon inférieur (24), maintenu sous celui-ci au moyen des deux vis (4) précitées.

2. Culasse selon la revendication 1,
**caractérisée en ce qu'**elle comprend deux parties, respectivement inférieure (6) et supérieure (8), jointes au droit d'un plan (P) contenant les axes respectifs des deux arbres à cames (10,12), la partie inférieure (6) de la culasse (2) est fixée au bloc-cylindres notamment par les deux vis (4) précitées, et à la partie supérieure (8) de la culasse (2) est fixé le tendeur (28).

3. Culasse selon l'une des revendications 1 et 2,
**caractérisée en ce que** les deux vis (4) comportant une tête (5) saillant d'une face (7) de la culasse en étant située sous la chaîne (18), le patin (30) comporte deux évidements d'extrémité (32) propres à recevoir chacun la tête d'une des deux vis.

## Patentansprüche

1. Zylinderkopf eines Verbrennungsmotors, der an einem Zylinderblock befestigt wird, mit zwei Nockenwellen (10, 12), die parallel zueinander verlaufen und über eine Kette (18) verbunden sind, welche einen unteren Abschnitt (24) und einen oberen Abschnitt (26) aufweist, die sich näher am beziehungsweise weiter entfernt vom Zylinderblock befinden, wobei der Zylinderkopf durch zu den beiden Wellen (10, 12) senkrechte Schrauben (4) am Zylinderblock befestigt ist, **dadurch gekennzeichnet, dass** die Kette (18) oberhalb der beiden Schrauben (4) zur Befestigung des Zylinderkopfes (2) am Zylinderblock angeordnet ist, und dadurch, dass der Zylinderkopf einen Spanner (28) aufweist, der oberhalb des oberen Abschnitts (26) angeordnet ist und auf diesen wirkt, sowie einen Fuß (30; 30a) zur Auflage des unteren Abschnitts (24), wobei der Fuß unter diesem mittels der beiden zuvor genannten Schrauben (4) gehalten wird.

2. Zylinderkopf nach Anspruch 1, **dadurch gekennzeichnet, dass** er zwei Abschnitte umfasst, einen unteren Abschnitt (6) und einen oberen Abschnitt (8), die im rechten Winkel zu einer Ebene (P) zusammengefügt sind, welche die jeweiligen Achsen der beiden Nockenwellen (10, 12) enthält, wobei der untere Abschnitt (6) des Zylinderkopfes (2) insbesondere durch die beiden zuvor genannten Schrauben (4) am Zylinderblock befestigt ist, während am oberen Abschnitt (8) des Zylinderkopfs der Spanner (28) befestigt ist.

3. Zylinderkopf nach Anspruch 1 oder 2, **dadurch gekennzeichnet, dass** die beiden Schrauben (4) einen Kopf (5) aufweisen, der aus einer Fläche (7) des Zylinderkopfs herausragt und unter der Kette (18) angeordnet ist, und dass der Fuß (30) zwei Aussparungen am Ende (32) aufweist die jeweils den Kopf einer der beiden Schrauben aufnehmen können.

## Claims

1. Cylinder head of a combustion engine intended to be fixed to a cylinder block comprising two parallel cam shafts (10, 20) connected by a chain (18) having a lower section (24) and an upper section (26) respectively closer to and further away from the cylinder block, the cylinder head being fixed to the cylinder block by screws (4) perpendicular to the two shafts (10, 20),
**characterised in that** the chain (18) is arranged above two screws (4) for fixing the cylinder head (2) to the cylinder block, and **in that** the cylinder head comprises a tensioner (28) acting on the upper section (26) while being arranged above it, and a shoe (30; 30a) for supporting the lower section (24), held under said lower section by means of the aforesaid two screws (4).

2. Cylinder head according to Claim 1,
**characterised in that** it comprises two portions, lower (6) and upper (8) respectively, joined in line with a plane (P) containing the respective axes of the two cam shafts (10, 12), the lower portion (6) of the cylinder head (2) is fixed to the cylinder block especially by the aforesaid two screws (4), and the tensioner (28) is fixed to the upper portion (8) of the cylinder head (2).

3. Cylinder head according to one of Claims 1 and 2,
**characterised in that**, the two screws (4) having a head (5) projecting from one face (7) of the cylinder head while being located under the chain (18), the shoe (30) has two end recesses (32) suitable for each receiving the head of one of the two screws.
